# EUROPEAN PATENT SPECIFICATION

(11) **EP 1 723 441 B1**
(45) Date of publication and mention of the grant of the patent: **11.05.2011**
(21) Application number: 05717993.9
(22) Date of filing: 11.03.2005
(51) Int. Cl.: G01S 7/12

(54) **RADAR DISPLAY AND PROCESSING APPARATUS**
RADARANZEIGE UND VERARBEITUNGSVORRICHTUNG
AFFICHAGE RADAR ET APPAREIL DE TRAITEMENT

(30) Priority: 12.03.2004 GB 0405522
(43) Date of publication of application: 22.11.2006
(73) Proprietor: Samarai, Laith, Bridge of Don Aberdeen AB22 8SE (GB)
(72) Inventor: Samarai, Laith, Bridge of Don Aberdeen AB22 8SE (GB)
(74) Representative: Jones, Keith William
(86) International application number: PCT/GB2005/000932
(87) International publication number: WO 2005/088340

(56) References cited:
- US-A- 4 065 770
- US-A- 5 554 990
- US-B1- 6 260 759

## Description

The present invention relates to a radar apparatus and in particular, a radar display and processing apparatus.

### Background of the invention

A radar system which predicts that a target will continue to move upon a route segment after the line-of-sight between the radar and the target has been obstructed is described in United States Patent No. 6,260, 759 B1.

One of the major uses of radar systems is for tracking the movement of sea-vessels for the detection of immigration, customs and fishing violations. Since sea-vessels may navigate at distances far outside the range of land-based radar systems, these targets are typically tracked by airborne radar systems.

An airborne maritime surveillance radar (MSR) system typically operates in a plan position indicating (PPI) mode, which maintains the elevation angle of the radar constant but varies the radar's azimuth angle. This enables the signal returned from the sea/land surface (and vessels thereon) (i.e. the return signal) to be mapped onto a single horizontal plane.

There are two main forms of airborne MSR systems, namely circular scanning MSR (or surveillance scan MSR) and sector scanning MSR. The operation of these two airborne MSR systems will now be described with reference to the accompanying drawings in which:
Figure 1 shows the detection field of a sector scanning MSR apparatus; and
Figure 2 shows a typical scenario in which a host aircraft that has used a sector scanning MSR system to detect a target vessel changes heading.

### (a) Circular Scanning MSR

In a circular scanning MSR system a radar antenna is mounted on the lower belly of an aircraft's (i.e. a host aircraft's) fuselage and is mechanically rotated through 360° to scan the land and sea in all directions below the host aircraft. The return signals are then used to calculate the speed and heading of detected target vessels. The resulting data are then typically displayed to a radar operator via a North-up display.

In a North-up display, the top of the screen is always designated as pointing to geographic/magnetic North and data from an on-board electronic compass etc. is used to display the position and heading of the host-aircraft. The positions of the detected target vessels are placed on the indicator display relative to the aircraft symbol. The indicator display further includes the scaled range and bearing of the target vessels to the host aircraft. Using this display, the heading of a target vessel can be readily estimated from successive readings of the target vessel's past movements.

### (b) Sector Scanning MSR

In a sector scanning MSR system a radar antenna is mounted on the nose of a host aircraft and (in contrast with the continuous rotational motion of the circular scanning MSR system) is mechanically swept by a cantilever-type of arrangement, back and forth between two azimuth bearings. The restricted angular range (□) of a sector scanning MSR apparatus limits the radar antenna to scanning to the front of the host aircraft and to a limited extent around the sides of the host aircraft.

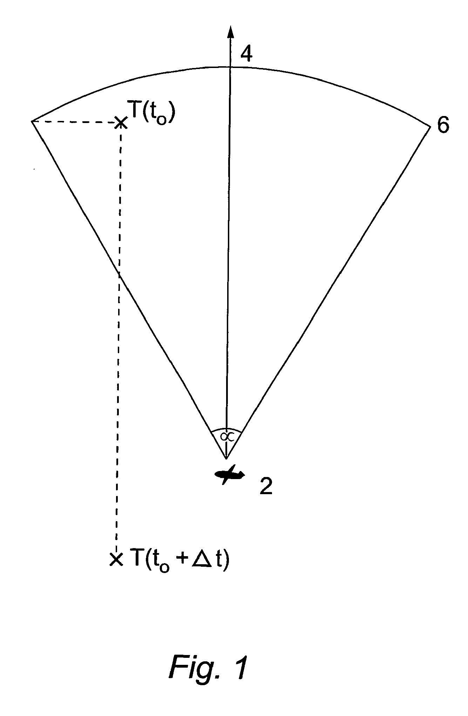

Figure 1 provides an example of the detection field of a sector scanning MSR apparatus. For this example, assume that a host aircraft 2 is travelling along a flight-path 4. In this case, the detection field of the sector scanning radar mounted in the host aircraft 2 is a cone-shaped region 6 with sector scan angle α. In addition, let a target vessel T detected in the detection field 6 at time to be designated by T(tₒ).

Assuming that the host aircraft 2 continues along the same flight-path 4 for a time period Δt, the host aircraft 2 will eventually pass the target vessel T and the target vessel T will be located behind the host aircraft 2 at position T(tₒ + Δft). Since the cone-shaped detection field 6 of the sector scanning MSR apparatus is mainly focussed to the front of the host aircraft 2, the target vessel T will no longer be within the range of the sector scanning MSR apparatus and will not be represented on the radar display.

From the above example, it can be seen that it would be normal for a target vessel to spend the majority of a host aircraft's mission time as an off-screen target (i.e. a target that is not in the sector scanning MSR system's detection field).

When a target vessel has been detected and passed by a host aircraft, the radar operator is required to remember the target vessel's position whilst the target vessel remains out of the detection range of the host aircraft's sector scanning MSR apparatus. However, during this time, the target vessel may have moved away from the position where it was first sighted. In this case, whilst a search pattern may eventually return the host aircraft to the vicinity of the target vessel, the radar operator could confuse various previously off-screen targets, especially if the previously off-screen targets are in close proximity to each other or their paths have crossed.

To further complicate the task of the radar operator, sector scanning MSR systems typically employ aircraft stabilised displays that show the host aircraft at a fixed display position (i.e. at the bottom of the display, the nose of the aircraft pointing to the twelve o'clock position) and show the locations of the target vessels at display positions relative to the host aircraft. In this case, the movement of the target vessels or the host aircraft is shown in the aircraft stabilised display by the rotation of the symbols representing the target vessel around the symbol representing the host aircraft.

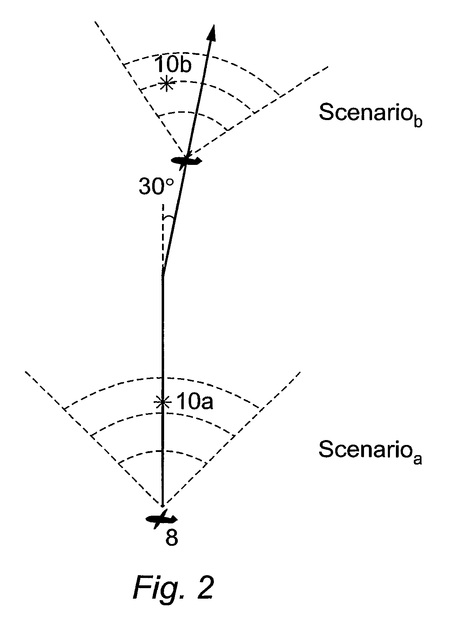

For example consider the situation depicted in Figure 2. In Scenarioₐ a host aircraft 8 is heading North (aircraft heading 000°) and there is a target vessel 10a located straight ahead of the host aircraft 8. However, if in a Scenario_{b},the host aircraft 8 was to turn to a heading of 030° the symbol representing the host aircraft would remain pointed at the 12 o'clock position in the aircraft stabilised display. However, the target vessel 10b would no longer be represented in the aircraft stabilised display as being in line with the host aircraft 8 heading and would instead be rotated to the 11 o'clock position on the aircraft stabilised display. Consequently, in order for the radar operator to determine the heading of a target vessel, the operator would first have to determine the heading of the host aircraft. Having determined the heading of the host aircraft, the radar operator could then use this parameter to determine the heading of the target vessel based on the angular displacement of the target vessel symbol on the aircraft stabilised display.

In view of the above, it can be readily seen that the aircraft stabilised display does not provide information regarding the movements target vessels in the conveniently accessible manner of a North-up display. Furthermore, the aircraft stabilised display does not provide information regarding off-screen targets. However, it should be noted that the previously described North-up display mode does not show off-screen targets either.

### (c) Track While Scan (TWS) Algorithm

Track while scan (TWS) algorithms are well-known techniques that combine the functions of radar searching and tracking to enable a number of targets to be tracked simultaneously. Whereas in a pure scanning technique, a radar operator must decide whether a target detected on a current scan is the same as a target detected in a previous scan, the TWS algorithm attempts to make this decision automatically.

Typically a TWS algorithm includes the following steps :
(1) detect a target and pre-process its return signal;
(2) correlate any new observations with the tracks of any existing targets;
if a new observation does not correlate with any existing target tracks, establish a new target track for the observation;
compare the new observations with predicted positions of existing targets; update the prediction model on the basis of the difference between the predicted target position and the new observations; and display and calculate predictions of target future positions

### Summary of the Invention

According to the invention there is provided radar display and processing apparatus for use with an airborne sector scanning radar apparatus, the radar display and processing apparatus comprising antenna means for emitting a radar signal across a range and detecting a return signal within said range; processing means for calculating the position of targets in the range and predicting the position of targets out of the range from the calculations made when the targets out of the range were in the range, display means having an aircraft stabilised display main window for displaying the position of targets in the range and a 360° North-up display sub-window for displaying both the position of targets in the range and the position of targets out of the range.

Desirably, the radar display and processing apparatus employs a tracking algorithm to predict the position of the first plurality of targets.

Desirably, the radar display and processing apparatus is for use with a sector scanning radar apparatus.

Desirably, the radar display and processing apparatus is mounted in an aircraft.

Desirably, the radar display and processing apparatus is used for maritime surveillance.

According to a second aspect of the invention there is provided a method of displaying and processing radar information for use with an airborne sector scanning radar apparatus, the method comprising the steps of emitting a radar signal across a range and detecting a return signal within said range via antenna means; using processing means to calculate the position of targets in the range and predict the position of targets out of the range from the calculations made when the targets out of the range were in the range; displaying the position of targets in the range on an aircraft stabilised display main window and displaying both the position of targets in the range and the position of targets out of the range on a 360° North-up display sub-window.

### Description and Drawings

An embodiment of the radar display and processing apparatus will be described with reference to its use with a sector scanning MSR. Accordingly, for the sake of clarity, the radar display and processing apparatus will be referred to hence forth as a sector scanning radar display apparatus.

An embodiment of the invention will now be described by way of example only with reference to the accompanying drawings in which :

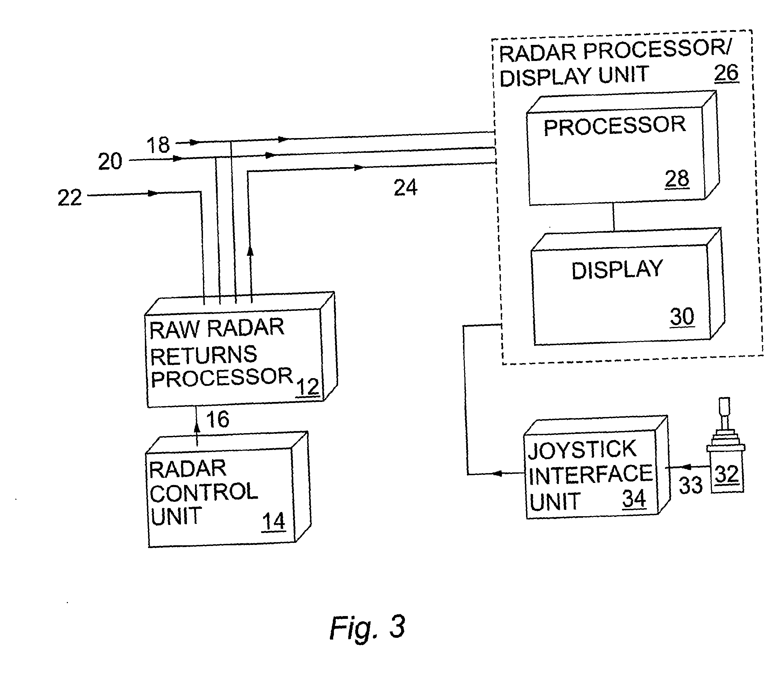

Figure 3 is a block diagram of the sector scanning radar display apparatus in accordance with a first embodiment of the invention;

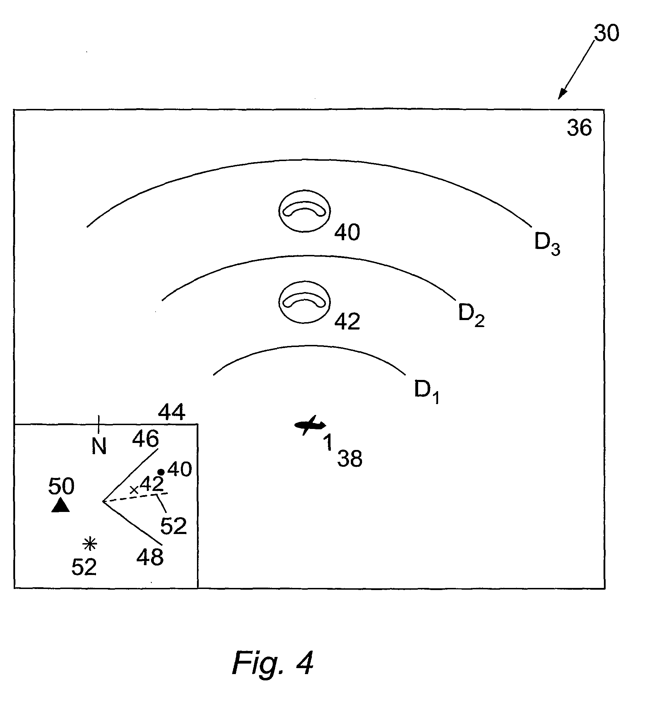

Figure 4 is a simplified screen shot from a display unit of the sector scanning radar display apparatus shown in Figure 3;

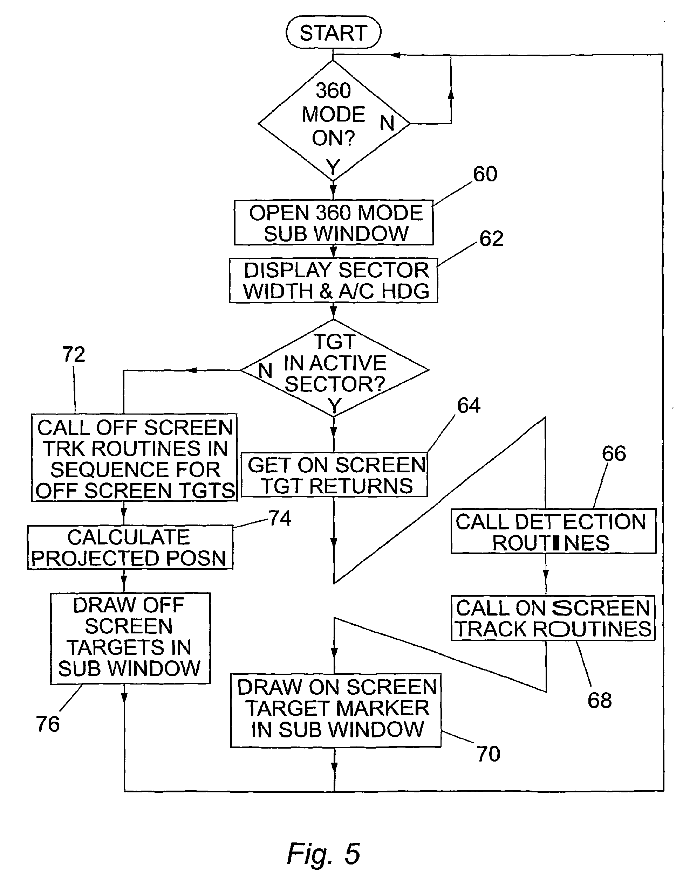

Figure 5 is a flowchart of the operation of the sector scanning radar display apparatus shown in Figure 3.

### (a) Sector Scanning MSR Apparatus

Before looking at the sector scanning radar display apparatus in detail, it is first useful to examine how the display apparatus interacts with the other components of the sector scanning radar apparatus.

The sector scanning radar apparatus comprises a raw radar returns processor unit 12 that operates under the control of a control unit 14 via control signal 16. The raw radar returns processor unit 12 uses aircraft area navigational data 18 (which comprises information regarding the host aircraft's present location, ground speed and attitude), antennae array azimuth data 20 and raw radar returns data 22 to plot the radar return data from detected target vessels in a single plane representation array. The single plane representation array is then output from the raw radar returns processor 12 as a video signal 24 and transmitted to the sector scanning radar display apparatus 26. The sector scanning radar display apparatus 26 comprises a processor unit 28 and a display unit 30. The sector scanning radar display apparatus 26 also receives the antennae array azimuth data 20 and the aircraft area navigational data 18. The sector scanning radar display apparatus 26 transmits the data to the processor unit 28 to calculate the heading and speed of both off-screen and on-screen target vessels. The resulting data are transmitted to the display unit 30 for presentation to a user.

Various operations of the sector scanning radar display apparatus 26 may also be controlled by the user by means of a joystick 32 which transmits a control signal 33 to a joystick interface unit 34. The joystick interface unit 34 processes and compresses the control signal 33 before transmitting it to the sector scanning radar display apparatus 26 to control the movement of an on-screen cursor.

Turning to Figure 4, the display unit 30 presents a conventional aircraft stabilised display 36 with the host aircraft 38 displayed at the bottom of the screen (pointing to the 12 o'clock position). The display further includes arcs D₁, D₂ and D₃ showing the sector scanning radar's detection field at different distances from the host aircraft 38. Targets 40 and 42 within the detection field of the sector scanning radar (also known as on-screen targets) are depicted between the arcs D₁, D₂ and D₃ in accordance with their distance from the host aircraft 38.

To enhance the radar operator's awareness of their current situation, a North-up sub-display window 44 is included in an "out of sector" region of the active screen area 36. Within the North-up sub-display window 44, a pair of solid lines 46, 48 depict the sector scanning radar's detection field. The sector scanning angle α is reflected in the angle between the solid lines 46 and 48. Off-screen targets 50, 52 and on-screen targets 40,42 are displayed on the North-up sub-display 44 with a central dotted line 52 depicting the heading of the host aircraft. Consequently, the North-up sub-display window provide the operator of the sector scanning MSR with an awareness of the status of targets disposed at 360° around the host aircraft.

To add further functionality, a plurality of TWS system control softkeys (not shown) is disposed around the main window 36. By using the softkeys together with the joystick (not shown) and a display panel mounted keypad (not shown), targets can be classified (or reclassified) as unknown, national, foreign, special interest etc. using "point and click" techniques.

Finally, coastline maps may be overlaid upon the radar display from stored digital charts and further areas of the sector scanning radar display apparatus 16 are reserved for aircraft and target data reporting, operator prompts and messages.

### Operation of Sector Scanning Radar Display Apparatus

As a host aircraft moves past a target vessel the on-board radar system calculates the present position, slant range and bearing, surface speed and heading of the target vessel. These data are used to predict the movement of the target vessel and the position of the target vessel while it is out of range of the sector scanning radar apparatus. The movement of a target vessel is predicted using an algorithm such as a Kalman/adaptive filter. The predictions of the target vessel's movements are stored in the sector scanning radar system's control unit processor.

The sector scanning radar display unit displays the predictions of the target vessel's movements in the North-up sub-window in real-time in the same manner as it would display the movements of target vessel detected by a circular scanning MSR system in a conventional North up display. This ensures that the operator is made aware of the position and projected movement of the off-screen target vessels.

In addition, the sector scanning radar display apparatus employs the TWS procedure to recognise a previously off-screen target vessel in the event that a search pattern returns the host-aircraft to the vicinity of the target.

In this case the sector scanning radar display apparatus uses the TWS algorithms to differentiate the target from other vessels and re-assigns a relevant previously used identifier to the target.

The sector scan radar display apparatus also employs well-known detection algorithms to improve the detection of weak targets in poor signal to noise conditions by reducing the effects of radar clutter and wave returns.

Figure 5 provides an overview of the operations of the sector scanning radar display apparatus. In a first step an operator is provided with the option to include the North-up 360° display sub-window within the conventional stabilised aircraft display main window. If the user has selected a 360° display mode 60, the North-up display sub-window is opened in the sector scanning radar display unit main window. The angular width of the sector scanned by the radar is then shown 62 in the North-up display sub-window together with the heading of the host aircraft. If a target vessel is detected within the sector scanning radar detection field the return signals from the target vessel are acquired 64 and processed using detection algorithms 66. The processed data are then used to calculate the target vessel's speed and heading and the resulting calculations are used to track the target vessel 68. The position of the target vessel relative to the host aircraft is then displayed on the North-up display sub-window and the aircraft stabilised main window 70.

If a previously detected target vessel is no longer within the sector scanning radar detection field, tracking routines are used to predict the position of the target vessel 72, 74. The predicted positions of all the out of range target vessels are then displayed in the North-up display sub-window 76, together with the on-screen target vessels.

Improvements and modifications can be made to the above without departing from the scope of the invention.

## Claims

1. Radar display and processing apparatus for use with an airborne sector scanning radar apparatus, the radar display and processing apparatus comprising:-
antenna means for emitting a radar signal across a range and detecting a return signal within said range; processing means for calculating the position of targets (40, 42) in the range and predicting the position of targets (50, 52) out of the range from the calculations made when the targets out of the range were in the range, display means having an aircraft stabilised display main window (36) for displaying the position of targets (40, 42) in the range and a 360° North-up display sub-window (44) for displaying both the position of targets (40, 42) in the range and the position of targets (50, 52) out of the range.

2. Radar display and processing apparatus according to claim 1, wherein a tracking algorithm is employed in order to predict the position of targets out of the range (50, 52) from the calculations made when the targets out of the range (50, 52) were in the range.

3. Radar display and processing apparatus according to either of claims 1 or 2, wherein said apparatus is adapted for use in maritime surveillance operations.

4. A method of displaying and processing radar information for use with an airborne sector scanning radar apparatus, the method comprising the steps of :-
emitting a radar signal across a range and detecting a return signal within said range via antenna means;
using processing means to calculate the position of targets (40, 42) in the range and predict the position of targets (50, 52) out of the range from the calculations made when the targets (50, 52) out of the range were in the range;
displaying the position of targets (40, 42) in the range on an aircraft stabilised display main window (36) and displaying both the position of targets (40, 42) in the range and the position of targets (50, 52) out of the range on a 360° North-up display sub-window (44).

5. A craft incorporating radar display and processing apparatus according to any of claims 1 to 3.

## Patentansprüche

1. Radaranzeige- und -verarbeitungsvorrichtung zur Verwendung mit einer Luftsektorabtastradarvorrichtung, wobei die Radaranzeige- und -verarbeitungsvorrichtung Folgendes beinhaltet:
ein Antennenmittel zum Emittieren eines Radarsignals über eine Reichweite und Erkennen eines Rücksignals innerhalb der Reichweite; ein Verarbeitungsmittel zum Berechnen der Position von Zielen (40, 42) innerhalb der Reichweite und
Vorhersagen der Position von Zielen (50, 52) außerhalb der Reichweite aus den Berechnungen, die vorgenommen wurden, als sich die Ziele außerhalb der Reichweite innerhalb der Reichweite befanden, ein Anzeigemittel mit einem auf das Luftfahrzeug stabilisierten Anzeigehauptfenster (36) zum Anzeigen der Position von Zielen (40, 42) innerhalb der Reichweite und einem 360° nordorientierten Anzeigeteilfenster (44) zum Anzeigen sowohl der Position von Zielen (40, 42) innerhalb der Reichweite als auch der Position von Zielen (50, 52) außerhalb der Reichweite.

2. Radaranzeige- und -verarbeitungsvorrichtung gemäß Anspruch 1, wobei ein Tracking-Algorithmus eingesetzt wird, um die Position von Zielen außerhalb der Reichweite (50, 52) aus den Berechnungen, die vorgenommen wurden, als sich die Ziele außerhalb der Reichweite (50, 52) innerhalb der Reichweite befanden, vorherzusagen.

3. Radaranzeige- und -verarbeitungsvorrichtung gemäß einem der Ansprüche 1 oder 2, wobei die Vorrichtung zur Verwendung bei maritimen Überwachungsaktionen angepasst ist.

4. Ein Verfahren zum Anzeigen und Verarbeiten von Radarinformationen zur Verwendung mit einer Luftsektorabtastradarvorrichtung, wobei das Verfahren die folgenden Schritte beinhaltet:
Emittieren eines Radarsignals über eine Reichweite und Erkennen eines Rücksignals innerhalb der Reichweite mittels eines Antennenmittels;
Verwenden eines Verarbeitungsmittels, um die Position von Zielen (40, 42) innerhalb der Reichweite zu berechnen und die Position von Zielen (50, 52) außerhalb der Reichweite aus den Berechnungen, die vorgenommen wurden, als sich die Ziele (50, 52) außerhalb der Reichweite innerhalb der Reichweite befanden, vorherzusagen;
Anzeigen der Position von Zielen (40, 42) innerhalb der Reichweite auf einem auf das Luftfahrzeug stabilisierten Anzeigehauptfenster (36) und Anzeigen sowohl der Position von Zielen (40, 42) innerhalb der Reichweite als auch der Position von Zielen (50, 52) außerhalb der Reichweite auf einem 360° nordorientierten Anzeigeteilfenster (44).

5. Ein Fahrzeug, in dem eine Radaranzeige- und -verarbeitungsvorrichtung gemäß einem der Ansprüche 1 bis 3 enthalten ist.

## Revendications

1. Appareil d'affichage et de traitement radar destiné à être utilisé avec un appareil radar à balayage sectoriel de bord, l'appareil d'affichage et de traitement radar comprenant:
un moyen formant antenne destiné à émettre un signal radar sur une portée et à détecter un signal de retour au sein de ladite portée ; un moyen de traitement destiné à calculer la position de cibles (40, 42) dans la portée et à prédire la position de cibles (50, 52) hors de la portée d'après les calculs réalisés lorsque les cibles hors de la portée se trouvaient dans la portée, un moyen d'affichage possédant une fenêtre principale d'affichage stabilisée d'aéronef (36) pour afficher la position de cibles (40, 42) dans la portée et une sous-fenêtre d'affichage Nord en haut sur 360° (44) pour afficher à la fois la position de cibles (40, 42) dans la portée et la position de cibles (50, 52) hors de la portée.

2. Appareil d'affichage et de traitement radar selon la revendication 1, dans lequel il est employé un algorithme de poursuite afin de prédire la position de cibles hors de la portée (50, 52) d'après les calculs réalisés lorsque les cibles hors de la portée (50, 52) se trouvaient dans la portée.

3. Appareil d'affichage et de traitement radar selon l'une ou l'autre des revendications 1 et 2, dans lequel ledit appareil est adapté pour être utilisé dans des opérations de surveillance maritime.

4. Une méthode pour afficher et traiter des informations radar destinée à être utilisée avec un appareil radar à balayage sectoriel de bord, la méthode comprenant les étapes de :
émettre un signal radar sur une portée et détecter un signal de retour au sein de ladite portée grâce à un moyen formant antenne ;
utiliser un moyen de traitement pour calculer la position de cibles (40, 42) dans la portée et prédire la position de cibles (50, 52) hors de la portée d'après les calculs réalisés lorsque les cibles (50, 52) hors de la portée se trouvaient dans la portée ;
afficher la position de cibles (40, 42) dans la portée sur une fenêtre principale d'affichage stabilisée d'aéronef (36) et afficher à la fois la position de cibles (40, 42) dans la portée et la position de cibles (50, 52) hors de la portée sur une sous-fenêtre d'affichage Nord en haut sur 360° (44).

5. Un engin incorporant un appareil d'affichage et de traitement radar selon n'importe lesquelles des revendications 1 à 3.
